# EUROPEAN PATENT APPLICATION

(11) **EP 4 718 487 A1**
(43) Date of publication of application: **01.04.2026**
(21) Application number: 25197269.1
(22) Date of filing: 21.08.2025
(51) Int. Cl.: H01G 11/82, H01M 10/04, H01M 50/103, H01M 50/15, H01M 50/176, H01M 50/528, H01M 50/54, H01M 50/55, H01M 50/553

(54) **ELECTRICAL ENERGY STORAGE DEVICE AND MANUFACTURING METHOD FOR THE SAME**

(30) Priority: 26.09.2024 JP 2024166844
(71) Applicant: Prime Planet Energy & Solutions, Inc., Chuo-ku, Tokyo 103-0022 (JP)
(72) Inventor: WATANABE, Ryo, Tokyo 103-0022 (JP); YAMAMOTO, Shota, Tokyo 103-0022 (JP); MIYAMURA, Yukinobu, Tokyo 103-0022 (JP); ITOH, Yusuke, Tokyo 103-0022 (JP)
(74) Representative: Kuhnen & Wacker Patent- und Rechtsanwaltsbüro PartG mbB

(57) **Abstract**

An electrical energy storage device (100) disclosed herein includes an electrode body (20) including a first electrode (22), a case (10), and a first electrode terminal (30) electrically connected to the first electrode (22) through a first conductive member (50). The case (10) includes a case main body (12) with a bottomed tubular shape that includes a bottom wall (12a) and an opening (12h) facing the bottom wall (12a), and a sealing plate (14) that seals the opening (12h) of the case main body (12). The first electrode terminal (30) is attached to the bottom wall (12a) and includes a penetration hole (30h). The first conductive member (50) is inserted into the penetration hole (30h) and joined to the first electrode terminal (30).

## Description

### BACKGROUND OF THE DISCLOSURE

### 1. Field

The present disclosure relates to an electrical energy storage device and a manufacturing method for the same.

### 2. Background

The specification of Chinese Utility Model No. 219017869 discloses an electrical energy storage device including an electrode body that includes a first electrode and a second electrode, a case that accommodates the electrode body, and a first electrode terminal that is electrically connected to the first electrode and is attached to a bottom wall of the case. According to the specification of Chinese Utility Model No. 219017869, an electrode tab (a first conductive member) provided in the first electrode is joined to the first electrode terminal in the case by welding or the like.

### SUMMARY

If the first electrode terminal is attached to the bottom wall of the case, when the first conductive member and the first electrode terminal are joined together, it is difficult to bring these members into contact with each other stably in the case, making the joining more difficult, which is a problem. In view of this, it has been demanded to provide an electrical energy storage device with high conduction reliability by joining the first conductive member and the first electrode terminal stably.

The present disclosure has been made in view of the above circumstances, and a main object thereof is to provide an electrical energy storage device with high conduction reliability.

An electrical energy storage device according to the present disclosure includes an electrode body that includes a first electrode and a second electrode, a case that accommodates the electrode body, and a first electrode terminal that is electrically connected to the first electrode through a first conductive member. The case includes a case main body with a bottomed tubular shape that includes a bottom wall, side walls provided at an outer periphery of the bottom wall, and an opening facing the bottom wall, and a sealing plate that seals the opening of the case main body. The first electrode terminal is attached to the bottom wall of the case main body and includes a penetration hole. The first conductive member is inserted into the penetration hole and joined to the first electrode terminal.

With the aforementioned structure, the first conductive member and the first electrode terminal can be joined together stably and the conduction reliability of a joining part can be improved. Accordingly, the electrical energy storage device with high reliability can be achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device according to one embodiment;
FIG. 2 is a schematic longitudinal cross-sectional view taken along line II-II in FIG. 1;
FIG. 3 is a schematic view illustrating a structure of an electrode body;
FIG. 4 is a partial enlarged view of a vicinity of a positive electrode terminal in FIG. 2;
FIG. 5 is a plan view schematically illustrating a spacer;
FIG. 6 is an explanatory view of a case preparing step and an inserting step;
FIG. 7 is a view corresponding to FIG. 5 according to a modification;
FIG. 8 is a view corresponding to FIG. 4 according to the modification;
FIG. 9 is a view corresponding to FIG. 4 according to a first modification;
FIG. 10A and FIG. 10B are explanatory views of a manufacturing process according to the first modification;
FIG. 11 is a view corresponding to FIG. 4 according to a second modification;
FIG. 12A and FIG. 12B are explanatory views of a manufacturing process according to the second modification;
FIG. 13 is a view corresponding to FIG. 4 according to a third modification; and
FIG. 14 is a view corresponding to FIG. 4 according to a fourth modification.

### DETAILED DESCRIPTION OF THE PREFERRED EMBODIMENTS

Hereinafter, some preferred embodiments of the art disclosed herein will be described with reference to the drawings. Incidentally, matters other than matters particularly mentioned in the present specification, and necessary for the implementation of the art disclosed herein (for example, the general configuration and manufacturing process of an electrical energy storage device that do not characterize the art disclosed herein) can be grasped as design matters of those skilled in the art based on the conventional art in the relevant field. The art disclosed herein can be implemented on the basis of the disclosure of the present specification and common technical knowledge in the relevant field. Moreover, in the present specification, the notation "A to B" for a range signifies "a value more than or equal to A and less than or equal to B", and is meant to encompass also the meaning of being "more than A" and "less than B".

### [Electrical energy storage device]

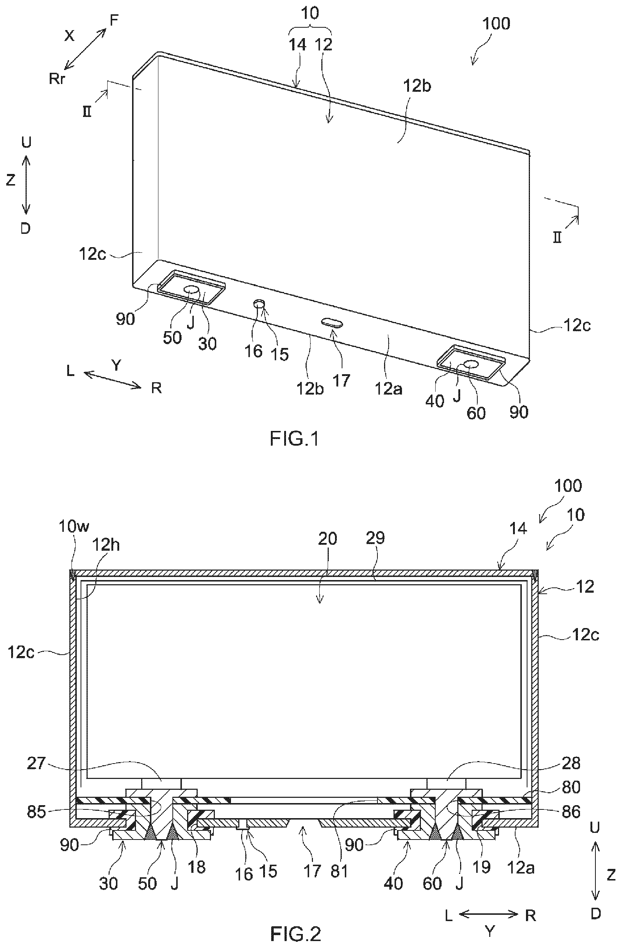

FIG. 1 is a perspective view schematically illustrating an electrical energy storage device 100 according to one embodiment. FIG. 2 is a schematic longitudinal cross-sectional view taken along line II-II in FIG. 1. In the following description, reference signs L, R, F, Rr, U, and D in the drawings respectively denote left, right, front, rear, up, and down. In addition, a reference sign X in the drawings denotes a short side direction (thickness direction) of the electrical energy storage device 100, a reference sign Y denotes a long side direction of the electrical energy storage device 100 that is orthogonal to the short side direction, and a reference sign Z denotes an up-down direction of the electrical energy storage device 100. The up-down direction Z can be a direction that coincides with a vertical direction. These directions are defined however for convenience of explanation, and do not limit the manner in which the electrical energy storage device 100 is disposed.

Note that the term "electrical energy storage device" in this specification refers to general devices that can be repeatedly charged and discharged as a result of the transfer of charge carriers between a positive electrode and a negative electrode through an electrolyte. The electrolyte may be any one of a liquid electrolyte (electrolyte solution), a gel electrolyte, and a solid electrolyte. The electrical energy storage device is a term that encompasses a secondary battery such as a lithium ion secondary battery or a nickel-hydrogen secondary battery, and moreover, a capacitor using a chemical reaction, such as a lithium ion capacitor or a pseudo-capacitor.

As illustrated in FIG. 2, the electrical energy storage device 100 includes a case 10, an electrode body 20, a positive electrode terminal 30, a negative electrode terminal 40, a positive electrode current collecting member 50, and a negative electrode current collecting member 60. The electrical energy storage device 100 further includes a spacer 80 and a liquid electrolyte (electrolyte solution, which is not illustrated) here. However, the positive electrode current collecting member 50, the negative electrode current collecting member 60, and the spacer 80 are not essential and can be omitted in another embodiment, which will also be described in a modification (3) below. The electrical energy storage device 100 is a nonaqueous electrolyte secondary battery here. The electrical energy storage device 100 is preferably a secondary battery such as a lithium ion secondary battery.

The case 10 is a housing that accommodates the electrode body 20. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is preferably formed of metal and is more preferably formed of, for example, aluminum, an aluminum alloy, iron, an iron alloy, or the like. As illustrated in FIG. 2, the case 10 includes a case main body 12 and a sealing plate (lid body) 14. The case 10 (the case main body 12 and the sealing plate 14) has the size in accordance with the size of the electrode body 20 and the number of electrode bodies 20 to be accommodated (one, or more than one), for example.

The case main body 12 has a bottomed tubular shape including a bottom wall, side walls provided at an outer periphery of the bottom wall, and an opening facing the bottom wall. The case main body 12 is a bottomed square container having an opening 12h at an upper surface thereof here. Specifically, as illustrated in FIG. 1, the case main body 12 has a bottomed square tubular shape including a bottom wall 12a (a first wall) with a substantially rectangular shape including long sides and short sides, a pair of long side walls 12b (a second wall and a third wall) extending from the long sides of the bottom wall 12a and facing each other, a pair of short side walls 12c (a fourth wall and a fifth wall) extending from the short sides of the bottom wall 12a and facing each other, and the opening 12h facing the bottom wall 12a (see FIG. 2). The case main body 12 preferably has a bottomed square tubular shape. The opening 12h has a substantially rectangular shape here. The bottom wall 12a forms a lower surface of the case 10.

Note that in the present specification, the term "substantially rectangular shape" encompasses, in addition to a perfect rectangular shape (rectangle), for example, an R-like shape whose corner part connecting a long side and a short side of the rectangular shape is rounded, a shape whose corner part includes a notch, and the like.

The long side wall 12b is larger in area than the short side wall 12c. In this embodiment, each of the long side walls 12b and the short side walls 12c is formed continuously from the outer periphery of the bottom wall 12a. In other words, a border part between the bottom wall 12a and the long side wall 12b is not a welded part (not joined by welding) but is a bent part. Similarly, a border part between the bottom wall 12a and the short side wall 12c is not a welded part (not joined by welding) but is a bent part. The case main body 12 with such a shape can be formed by, for example, deep drawing of one metal plate. The long side wall 12b and the short side wall 12c are examples of "the side walls".

The sealing plate 14 is attached to the case main body 12 so as to seal the opening 12h of the case main body 12. The sealing plate 14 is typically a plate-shaped member. The sealing plate 14 faces the bottom wall 12a of the case main body 12. The sealing plate 14 has a substantially rectangular shape here. The sealing plate 14 forms an upper surface of the case 10. The case 10 is integrated in such a way that the sealing plate 14 is joined (for example, joined by welding) to a periphery of the opening 12h of the case main body 12. As illustrated in FIG. 2, a joining part (for example, welding joining part) 10w is formed in an engagement part between the case main body 12 and the sealing plate 14. Thus, the case 10 is hermetically sealed (closed).

As illustrated in FIG. 1 and FIG. 2, an electrolyte solution injection hole 15, a gas discharge valve 17, and terminal extraction holes 18 and 19 are provided at the bottom wall 12a of the case main body 12. The electrolyte solution injection hole 15 is a penetration hole for injecting the electrolyte solution inside the case 10 after the sealing plate 14 is assembled to the case main body 12. The electrolyte solution injection hole 15 is sealed by a sealing member 16 after the injection of the electrolyte solution. Note that the electrolyte solution injection hole 15 may be provided at the sealing plate 14. The gas discharge valve 17 is a thin part that is configured to break when the pressure in the case 10 becomes more than or equal to a predetermined value so as to discharge the gas out of the case 10. Note that the gas discharge valve 17 may be provided at the sealing plate 14. The terminal extraction holes 18 and 19 are formed on both end parts of the bottom wall 12a in the long side direction Y. The terminal extraction holes 18 and 19 penetrate the bottom wall 12a. To the terminal extraction holes 18 and 19 of the bottom wall 12a, the positive electrode terminal 30 and the negative electrode terminal 40 are inserted, respectively, which will be described in detail below.

The electrode body 20 is accommodated inside the case 10. The number of electrode bodies 20 to be accommodated inside one case 10 is not limited in particular, and may one, or more than one (for example, two or more or three or more). As illustrated in FIG. 2, the electrode body 20 is disposed inside the case 10 while being covered with an electrode body holder 29 made of a resin sheet here. Thus, the direct contact between the electrode body 20 and the case main body 12 is prevented. The material of the electrode body holder 29 may be the same as the conventionally used material without particular limitations. Examples of such a material include polyolefin resins such as polypropylene (PP) and polyethylene (PE), fluorine resins such as perfluoroalkoxy alkane and polytetrafluoroethylene (PTFE), and the like.

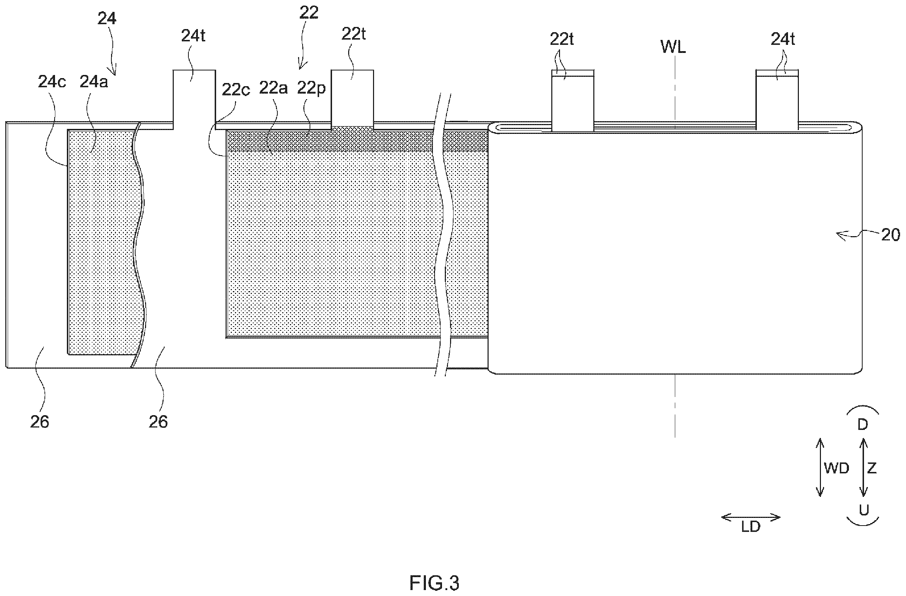

FIG. 3 is a schematic view illustrating a structure of the electrode body 20. A reference sign LD in FIG. 3 denotes a longitudinal direction of the electrode body 20 that is manufactured into the band shape. A reference sign WD denotes a direction that is substantially orthogonal to the longitudinal direction LD and corresponds to a winding axis direction of the electrode body 20.

As illustrated in FIG. 3, the electrode body 20 includes a positive electrode 22 and a negative electrode 24. In this embodiment, the electrode body 20 is a wound electrode body in which the positive electrode 22 with a band shape and the negative electrode 24 with a band shape are stacked through two separators 26 with a band shape in an insulated state and wound in the longitudinal direction LD using a winding axis WL as a center. However, the electrode body 20 may be a stack type electrode body formed in such a way that a plurality of square (typically, rectangular) positive electrodes and a plurality of square (typically, rectangular) negative electrodes are stacked in the insulated state. The electrode body 20 has a flat outer shape here. The electrode body 20 is accommodated inside the case 10 so that the winding axis WL substantially coincides with the up-down direction Z here. One of the positive electrode 22 and the negative electrode 24 is one example of "a first electrode" while the other is one example of "a second electrode".

As illustrated in FIG. 3, the positive electrode 22 includes a positive electrode current collector 22c with a band shape and a positive electrode active material layer 22a fixed on at least one surface (preferably both surfaces) of the positive electrode current collector 22c. The positive electrode 22 further includes a positive electrode protection layer 22p here. However, the positive electrode protection layer 22p is not essential and can be omitted in another embodiment. For each member of the positive electrode 22, the conventionally known materials that can be used for general electrical energy storage devices (for example, lithium ion secondary batteries) can be used without particular limitations. The positive electrode current collector 22c is preferably formed of a conductive metal such as aluminum, an aluminum alloy, nickel, or stainless steel, and here is a metal foil, specifically an aluminum foil. However, the positive electrode current collector 22c may include an insulating core body (for example, resin layer), which will also be described below in a modification (1-1).

As illustrated in FIG. 3, the positive electrode 22 includes a plurality of positive electrode tabs 22t at one end side in the winding axis direction WD. The positive electrode tabs 22t are provided with a predetermined space (intermittently) along the longitudinal direction LD. The number of positive electrode tabs 22t attached to one electrode body 20 may be several tens or more, for example, about 40 to 60. Each of the plurality of positive electrode tabs 22t has a convex shape and projects to the outside (left side in FIG. 3). The plurality of positive electrode tabs 22t have the same shape here, and each has a substantially rectangular shape. The plurality of positive electrode tabs 22t may be, however, different from each other in size or shape. The positive electrode tabs 22t are integrally provided at the positive electrode 22 here. The positive electrode tab 22t is a region where the positive electrode active material layer 22a is not formed in the positive electrode current collector 22c. The positive electrode current collector 22c is exposed in at least a part of the positive electrode tab 22t. However, the positive electrode tabs 22t and the positive electrode 22 may be different members, which will also be described in a modification (1-2) below. In the case where the positive electrode 22 is "the first electrode", the positive electrode tab 22t is one example of "a first electrode tab".

The plurality of positive electrode tabs 22t are stacked at one end part of the electrode body 20 in the winding axis direction WD and form a positive electrode tab group 27 (see FIG. 2). As illustrated in FIG. 2, a tip end part of the positive electrode tab group 27 (lower end part in FIG. 2) is connected (specifically, joined) to the positive electrode current collecting member 50. The positive electrode 22 is electrically connected to the positive electrode terminal 30 through the positive electrode tab group 27 (the plurality of positive electrode tabs 22t) and the positive electrode current collecting member 50. In the case where the positive electrode 22 is "the first electrode", the positive electrode tab group 27 is one example of "a first electrode tab group".

As illustrated in FIG. 3, the positive electrode active material layer 22a is provided in a band shape along the longitudinal direction LD of the positive electrode current collector 22c. The positive electrode active material layer 22a contains a positive electrode active material capable of reversibly storing and releasing the charge carriers (for example, a lithium transition metal complex oxide such as a lithium nickel cobalt manganese complex oxide). The positive electrode active material layer 22a may contain an optional component other than the positive electrode active material, for example, a conductive material, a binder, various additive components, or the like.

As illustrated in FIG. 3, the positive electrode protection layer 22p is provided in a band shape along the longitudinal direction LD of the positive electrode current collector 22c. The positive electrode protection layer 22p is provided at a border part between the positive electrode current collector 22c and the positive electrode active material layer 22a in the winding axis direction WD. The positive electrode protection layer 22p contains inorganic filler with an insulation property (for example, ceramic particles of alumina or the like). The positive electrode protection layer 22p may contain an optional component other than the inorganic filler, such as a binder, a conductive material, or various additive components. The provision of the positive electrode protection layer 22p can prevent the internal short-circuiting of the electrical energy storage device 100 due to the direct contact between the positive electrode 22 and a negative electrode active material layer 24a at the damage of the separator 26.

As illustrated in FIG. 3, the negative electrode 24 includes a negative electrode current collector 24c with a band shape and the negative electrode active material layer 24a fixed on at least one surface (preferably both surfaces) of the negative electrode current collector 24c. For each member of the negative electrode 24, the conventionally known materials that can be used for general electrical energy storage devices (for example, lithium ion secondary batteries) can be used without particular limitations. The negative electrode current collector 24c is preferably formed of a conductive metal such as copper, a copper alloy, nickel, or stainless steel, and here is a metal foil, specifically a copper foil. However, the negative electrode current collector 24c may include an insulating core body (for example, resin layer), which will also be described below in the modification (1-1).

As illustrated in FIG. 3, the negative electrode 24 includes a plurality of negative electrode tabs 24t at one end side in the winding axis direction WD. In the winding axis direction WD, the negative electrode tabs 24t are provided at an end part on the same side as the positive electrode tabs 22t (on the left side in FIG. 3). The plurality of negative electrode tabs 24t are provided with a predetermined space (intermittently) along the longitudinal direction LD. The number of negative electrode tabs 24t attached to one electrode body 20 is substantially equal to the number of positive electrode tabs 22t and can be several tens or more. Each of the plurality of negative electrode tabs 24t has a convex shape and projects to the outside (left side in FIG. 3). The plurality of negative electrode tabs 24t have the same shape here, and each has a substantially rectangular shape. The plurality of negative electrode tabs 24t may be, however, different from each other in size or shape. The negative electrode tabs 24t are integrally provided at the negative electrode 24 here. The negative electrode tab 24t is a region where the negative electrode active material layer 24a is not formed in the negative electrode current collector 24c. The negative electrode current collector 24c is exposed in at least a part of the negative electrode tab 24t. However, the negative electrode tabs 24t and the negative electrode 24 may be different members, which will also be described in the modification (1-2) below. In the case where the negative electrode 24 is "the first electrode", the negative electrode tab 24t is one example of "the first electrode tab".

The plurality of negative electrode tabs 24t are stacked at one end part of the electrode body 20 in the winding axis direction WD and form a negative electrode tab group 28 (see FIG. 2). As illustrated in FIG. 2, a tip end part of the negative electrode tab group 28 (lower end part in FIG. 2) is connected (specifically, joined) to the negative electrode current collecting member 60. The negative electrode 24 is electrically connected to the negative electrode terminal 40 through the negative electrode tab group 28 (the plurality of negative electrode tabs 24t) and the negative electrode current collecting member 60. In the case where the negative electrode 24 is "the first electrode", the negative electrode tab group 28 is one example of "the first electrode tab group".

As illustrated in FIG. 3, the negative electrode active material layer 24a is provided in a band shape along the longitudinal direction LD of the negative electrode current collector 24c. The negative electrode active material layer 24a contains a negative electrode active material capable of reversibly storing and releasing the charge carriers (for example, a carbon material such as graphite, or a silicon material). The negative electrode active material layer 24a may contain an optional component other than the negative electrode active material, for example, a binder, a dispersant, various additive components, or the like.

As illustrated in FIG. 3, the separator 26 is a member that insulates the positive electrode active material layer 22a of the positive electrode 22 and the negative electrode active material layer 24a of the negative electrode 24 from each other. The separator 26 is preferably, for example, a porous sheet made of resin including polyolefin resin such as polyethylene (PE) or polypropylene (PP). The separator 26 may include a base material part formed by a porous sheet made of resin, and a functional layer (for example, a heat resistance layer (HRL) or an adhesive layer) formed on at least one surface of the base material part. The heat resistance layer is a layer including inorganic filler and a binder, typically. As the inorganic filler, for example, alumina, boehmite, aluminum hydroxide, titania, or the like can be used. The separator 26 forms an outer surface (outermost peripheral part) of the electrode body 20 here.

The liquid electrolyte (electrolyte solution) may be any electrolyte solution used in general electrical energy storage devices (for example, lithium ion secondary batteries), without particular limitations. One example thereof is a nonaqueous electrolyte solution in which a supporting salt is dissolved in a nonaqueous solvent. Examples of the nonaqueous solvent include carbonate solvents such as ethylene carbonate, dimethyl carbonate, and ethyl methyl carbonate. One example of the supporting salt is lithium salt such as LiPF₆ and sodium salt such as NaPF₆. The electrolyte solution may contain an additive as necessary. However, the electrolyte may be in a solid form (solid electrolyte) to be integrated with the electrode body 20 in another embodiment.

As illustrated in FIG. 1 and FIG. 2, the positive electrode terminal 30 and the negative electrode terminal 40 are attached to the bottom wall 12a of the case main body 12 with the bottomed tubular shape. The positive electrode terminal 30 is attached to one end part of the bottom wall 12a in the long side direction Y (left end part in FIG. 1 and FIG. 2). The negative electrode terminal 40 is attached to the other end part of the bottom wall 12a in the long side direction Y (right end part in FIG. 1 and FIG. 2). The positive electrode terminal 30 is inserted into the terminal extraction hole 18 of the bottom wall 12a and has a part thereof exposed out of the case 10. The negative electrode terminal 40 is inserted into the terminal extraction hole 19 of the bottom wall 12a and has a part thereof exposed out of the case 10. In the case where the positive electrode 22 is "the first electrode", the positive electrode terminal 30 is one example of "a first electrode terminal". In the case where the negative electrode 24 is "the first electrode", the negative electrode terminal 40 is one example of "the first electrode terminal".

In the case 10, the terminal (the positive electrode terminal 30 and/or the negative electrode terminal 40) is provided on a surface on the side opposite to the joining part 10w between the case main body 12 and the sealing plate 14. In this manner, the terminal (preferably, the positive electrode terminal 30 and the negative electrode terminal 40) is provided at the bottom wall 12a apart from the joining part 10w. Thus, even in the application of an external force to the terminal during the use of the electrical energy storage device 100, for example, the application of a large burden on the joining part 10w can be suppressed. Therefore, the damage of the joining part 10w is suppressed and the sealability and reliability of the joining part 10w can be improved.

As illustrated in FIG. 1 and FIG. 2, the terminal (the positive electrode terminal 30 and/or the negative electrode terminal 40) is insulated from the bottom wall 12a of the case main body 12 by the insulating member (here, a gasket 90). The terminal is fixed to the bottom wall 12a of the case main body 12 through the gasket 90. The gasket 90 is preferably made of resin. The terminal may be attached to the bottom wall 12a together with the gasket 90 by a method of insert molding (integral molding). Thus, the adhesion among the terminal, the gasket 90, and the bottom wall 12a is increased and the sealability and the reliability can be improved. In another embodiment, however, the terminal may be fixed to the bottom wall 12a together with the gasket 90, for example, by a caulking process or the like. For example, the terminal can be fixed to the case main body 12 by connecting the terminal to an external conductive member disposed on the outside of the case main body 12 by the caulking process and/or welding joining. Alternatively, the terminal can be fixed to the case main body 12 by connecting the terminal to an internal conductive member disposed on the inside of the case main body 12 by the caulking process and/or welding joining. Further alternatively, the terminal may be fixed to the bottom wall 12a through an adhesive layer (adhesive or the like).

In an example to be described below in detail, the positive electrode 22 is "the first electrode" but the negative electrode 24 side can also have the similar structure. In that case, "the positive electrode" below can be replaced by "the negative electrode" as appropriate. The art disclosed herein is more preferably applied to each of the positive electrode 22 side and the negative electrode 24 side.

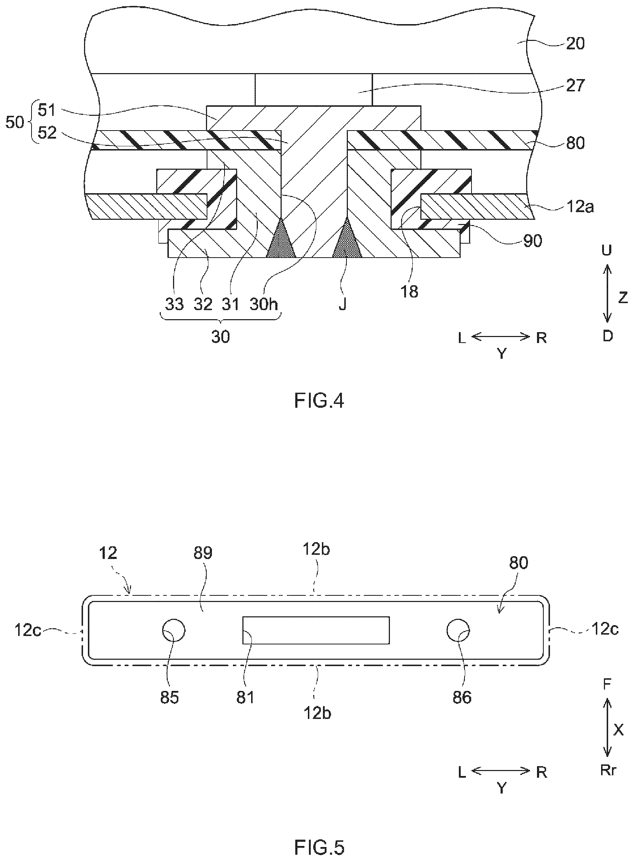

FIG. 4 is a partial enlarged view of a vicinity of the positive electrode terminal 30. The positive electrode terminal 30 is inserted into the terminal extraction hole 18 of the bottom wall 12a and extends from the inside of the case main body 12 (upper side in FIG. 4) to the outside (lower side in FIG. 4). The positive electrode terminal 30 partially projects from the terminal extraction hole 18 to an outer surface side of the bottom wall 12a and is exposed out of the case 10. The positive electrode terminal 30 is electrically connected to the positive electrode 22 of the electrode body 20. As illustrated in FIG. 4, the positive electrode terminal 30 is electrically connected to the positive electrode 22 of the electrode body 20 through the positive electrode current collecting member 50 and the positive electrode tab group 27 (the plurality of positive electrode tabs 22t) here. The positive electrode terminal 30 is preferably formed of metal, and is more preferably formed of aluminum or an aluminum alloy, for example. In this embodiment, the positive electrode terminal 30 includes a penetration hole 30h. The positive electrode terminal 30 further includes a tubular part 31, an outer flange part 32, and an inner flange part 33 here.

The tubular part 31 is a part disposed in the terminal extraction hole 18. The tubular part 31 extends in the up-down direction Z. Although not illustrated, the tubular part 31 here has an annular shape in an XY plan view. That is to say, the outer shape of the tubular part 31 is a circular cylindrical shape. The outer flange part 32 is a part that is coupled to a lower end part of the tubular part 31 (an end part on the outer surface side of the bottom wall 12a) and that has a larger outer shape than the tubular part 31. The outer flange part 32 is disposed on the outside of the case main body 12 relative to the terminal extraction hole 18 (on the outer surface side of the bottom wall 12a). The outer flange part 32 has a substantially rectangular shape in the XY plan view here as illustrated in FIG. 1. The inner flange part 33 is a part that is coupled to an upper end part of the tubular part 31 (an end part on the electrode body 20 side) and that has a larger outer shape than the tubular part 31. The inner flange part 33 is disposed on the inside of the case main body 12 relative to the terminal extraction hole 18 (on the electrode body 20 side). The spacer 80, which will be described below, is in contact with the inner flange part 33 here. Note that the outer shape of each of the outer flange part 32 and the inner flange part 33 can be made larger than the inner diameter of the terminal extraction hole 18. In addition, the shape of each of the outer flange part 32 and the inner flange part 33 in the plan view may be a circular shape.

The penetration hole 30h penetrates the positive electrode terminal 30 in the up-down direction Z. The penetration hole 30h extends from the inside of the case main body 12 to the outside. The penetration hole 30h is provided along the terminal extraction hole 18. As can be seen from FIG. 1 and FIG. 4, the penetration hole 30h is formed in a circular cylindrical shape here. The penetration hole 30h preferably has a circular shape in the XY plan view. In the XY plan view, a center of the penetration hole 30h coincides with a center of the outer flange part 32 of the positive electrode terminal 30. In the XY plan view, the center of the penetration hole 30h coincides with a center of the inner flange part 33 of the positive electrode terminal 30. To the penetration hole 30h, the positive electrode current collecting member 50 (specifically, a second connection part 52) to be described below is inserted.

The positive electrode current collecting member 50 is a conductive member and forms a conductive path between the positive electrode 22 (specifically, the positive electrode tab group 27) and the positive electrode terminal 30. By the provision of the positive electrode current collecting member 50 between the positive electrode tab group 27 and the positive electrode terminal 30, the electric connection can be easily kept more stably. The positive electrode current collecting member 50 is preferably formed of metal with excellent conductivity and is formed of, for example, aluminum or an aluminum alloy. The positive electrode current collecting member 50 may be formed of the metal similar to that of the positive electrode tab 22t and/or the positive electrode terminal 30. As illustrated in FIG. 4, the positive electrode current collecting member 50 includes a first connection part 51 and the second connection part 52. In the case where the positive electrode 22 is "the first electrode", the positive electrode current collecting member 50 is one example of "a first conductive member".

The first connection part 51 is provided at an upper end part of the positive electrode current collecting member 50 (an end part on the electrode body 20 side). The first connection part 51 is attached to the positive electrode tab group 27 (the plurality of positive electrode tabs 22t) and is electrically connected to the positive electrode 22. The first connection part 51 is joined (for example, joined by welding such as ultrasonic welding) to the positive electrode tab group 27 (the plurality of positive electrode tabs 22t). The first connection part 51 has a flat shape here, and extends along an inner surface of the bottom wall 12a. As illustrated in FIG. 4, the width of the first connection part 51 is larger than that of the positive electrode tab group 27 in the long side direction Y. The width of the first connection part 51 is larger than that of the penetration hole 30h of the positive electrode terminal 30.

The second connection part 52 is provided at a lower end part of the positive electrode current collecting member 50 (an end part on the bottom wall 12a side). The second connection part 52 is disposed on the opposite side of the positive electrode tab group 27 with the first connection part 51 therebetween. The second connection part 52 is disposed at a position overlapping with the positive electrode tab group 27 in the XY plan view. The second connection part 52 is inserted into the penetration hole 30h of the positive electrode terminal 30. As can be seen from FIG. 1 and FIG. 4, the second connection part 52 has a columnar shape, specifically, a circular columnar shape here. The second connection part 52 preferably has a circular shape in the XY plan view. When both the second connection part 52 of the positive electrode current collecting member 50 and the penetration hole 30h of the positive electrode terminal 30 have a circular shape in the XY plan view, the insertion property of the second connection part 52 and the airtightness of the penetration hole 30h after the second connection part 52 is inserted can be increased. Accordingly, the reliability of the electrical energy storage device 100 can be improved.

The second connection part 52 is smaller than the penetration hole 30h of the positive electrode terminal 30 here, and is inserted into the penetration hole 30h of the positive electrode terminal 30. Thus, the contact area between the positive electrode terminal 30 and the positive electrode current collecting member 50 can increase. Accordingly, the electric connection between the positive electrode terminal 30 and the positive electrode current collecting member 50 can be easily kept more stably and the conduction reliability can be improved. Note that it is only necessary that the second connection part 52 has a structure of being able to be inserted into the penetration hole 30h and may be a projection part or the like in another embodiment. Alternatively, the second connection part 52 may have a flat plate shape, which will also be described in the modification (3) below.

The second connection part 52 extends from the inside of the case 10 to the outside here. A lower end part of the second connection part 52 is exposed to the outside of the case main body 12 (to the outer surface side of the bottom wall 12a) here. The lower end part of the second connection part 52 exists within the penetration hole 30h here. A lower end surface of the second connection part 52 is substantially flush with the outer flange part 32 of the positive electrode terminal 30 here (error in manufacture or the like is allowable). The second connection part 52 does not project from the penetration hole 30h here. However, the second connection part 52 may project from the penetration hole 30h, which will also be described in the modification (3) below.

The positive electrode current collecting member 50 is joined to the positive electrode terminal 30. In this embodiment, as illustrated in FIG. 4, a periphery of the penetration hole 30h of the positive electrode terminal 30 and the second connection part 52 of the positive electrode current collecting member 50 inserted into the penetration hole 30h (in particular, a tip end part on the outside of the case main body 12) are joined together. The positive electrode terminal 30 and the positive electrode current collecting member 50 are joined together outside the case main body 12 (on the outer surface side of the bottom wall 12a). By joining the positive electrode terminal 30 and the positive electrode current collecting member 50 outside the case main body 12, the positive electrode terminal 30 and the positive electrode current collecting member 50 can be joined together more stably.

A joining part J is formed on the outside of the case main body 12. The joining part J is preferably a welding joining part formed by irradiation with an energy beam in laser welding or the like, for example. The joining part J protrudes out of the penetration hole 30h here. As illustrated in FIG. 1, the joining part J has a ring shape (for example, annular shape) here. The joining part J is provided continuously along the entire circumference at a border part between the periphery of the penetration hole 30h of the positive electrode terminal 30 and the second connection part 52 of the positive electrode current collecting member 50. Thus, the electric connection between the positive electrode terminal 30 and the positive electrode current collecting member 50 can be easily kept more stably and the conduction reliability of the joining part J can be improved.

Note that the positive electrode 22 and the positive electrode terminal 30 are electrically connected to each other through the positive electrode current collecting member 50 as the conductive member in this embodiment; however, in another embodiment, the positive electrode 22 may be electrically connected to the positive electrode terminal 30 not through the positive electrode current collecting member 50 but only through the positive electrode tab group 27 as the conductive member, for example, which will also be described in the modification (3) below.

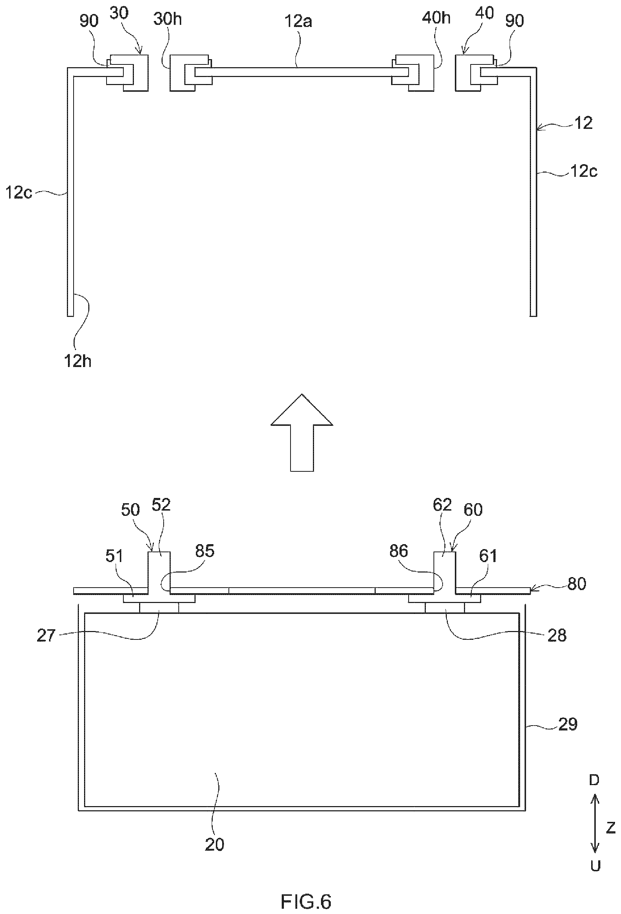

The negative electrode terminal 40 is electrically connected to the negative electrode 24 of the electrode body 20. The negative electrode terminal 40 has a structure similar to that of the positive electrode terminal 30 here. The negative electrode terminal 40 includes a penetration hole 40h (see FIG. 6). The negative electrode terminal 40 is electrically connected to the negative electrode 24 of the electrode body 20 through the negative electrode current collecting member 60 and the negative electrode tab group 28 (the plurality of negative electrode tabs 24t) here. The negative electrode terminal 40 is preferably formed of metal, and is more preferably formed of copper or a copper alloy, for example.

The negative electrode current collecting member 60 is a conductive member and forms a conductive path between the negative electrode 24 (specifically, the negative electrode tab group 28) and the negative electrode terminal 40. The negative electrode current collecting member 60 is preferably formed of metal with excellent conductivity and is formed of, for example, copper or a copper alloy. The negative electrode current collecting member 60 may be formed of the metal similar to that of the negative electrode tab 24t and/or the negative electrode terminal 40. The negative electrode current collecting member 60 has a structure similar to that of the positive electrode current collecting member 50 here. The negative electrode current collecting member 60 includes a first connection part 61 and a second connection part 62 (see FIG. 6). In the case where the negative electrode 24 is "the first electrode", the negative electrode current collecting member 60 is one example of "the first conductive member".

The spacer 80 is disposed between the bottom wall 12a (specifically, on an inner side surface, an upper surface in FIG. 2) and the electrode body 20 (specifically, a lower side surface in FIG. 2) inside the case 10 as illustrated in FIG. 2. The spacer 80 is disposed between the inner flange part 33 of the positive electrode terminal 30 fixed to the bottom wall 12a and the first connection part 51 of the positive electrode current collecting member 50 here as illustrated in FIG. 4. The spacer 80 typically has an insulating property, and is preferably made of resin. The material of the spacer 80 may be the same as the materials given as the examples of the electrode body holder 29. The spacer 80 is one member here. However, the spacer 80 may be formed by a plurality of members disposed at separate positions, for example. In one example, a first spacer and a second spacer can be disposed on the positive electrode terminal 30 side and on the negative electrode terminal 40 side, respectively.

FIG. 5 is a plan view schematically illustrating the spacer 80. In FIG. 5, the side walls of the case main body 12 (the pair of long side walls 12b and the pair of short side walls 12c) are illustrated together with virtual lines. As illustrated in FIG. 5, the spacer 80 includes a base part 89 with a flat plate shape, and a pair of end part penetration holes 85 and 86. The spacer 80 further includes a central part penetration hole 81 here.

As illustrated in FIG. 2, the base part 89 extends along the bottom wall 12a of the case main body 12. In the XY plan view, the outer shape of the base part 89 is preferably substantially the same as or larger than the outer shape of the electrode body 20. As illustrated in FIG. 5, in the XY plan view, an outer periphery of the spacer 80 (specifically, the base part 89) is preferably in contact with or close to the inner surface of the side wall of the case main body 12. The gap between the spacer 80 and the side wall of the case main body 12 (the difference between the inner size of the case main body 12 and the outer size of the spacer 80) is preferably 1 mm or less, more preferably 0.8 mm or less, and still more preferably 0.5 mm or less.

As illustrated in FIG. 2, the central part penetration hole 81 is provided in a part facing the electrolyte solution injection hole 15 and the gas discharge valve 17 (overlapping part in the XY plan view). Thus, in the up-down direction Z, the electrolyte solution injection hole 15 and the gas discharge valve 17 directly face the electrode body 20 (or the electrode body holder 29). To the end part penetration hole 85, the positive electrode current collecting member 50 (specifically, the second connection part 52 with a columnar shape) is inserted. To the end part penetration hole 86, the negative electrode current collecting member 60 (specifically, the second connection part 62 with a columnar shape) is inserted. Thus, the spacer 80 is integrated (connected) with the electrode body 20 and the conductive member (the positive electrode current collecting member 50 and/or the negative electrode current collecting member 60).

The spacer 80 has substantially the same outer shape as the inner surface of the side wall of the case main body 12 and includes the end part penetration holes 85 and 86 to which the conductive member (the positive electrode current collecting member 50 and/or the negative electrode current collecting member 60) is inserted; thus, in (step 2) an inserting step in a manufacturing method to be described below, it is easy to guide the electrode body 20 and the conductive member to desired positions. That is to say, the spacer 80 can also function as a guide member for the electrode body 20 or a positioning member for the conductive member. Additionally, in (step 3) a joining step in the manufacturing method to be descried below, the conductive member is brought into contact with the terminal (the positive electrode terminal 30 and/or the negative electrode terminal 40) stably to facilitate the joining.

### [Manufacturing method for electrical energy storage device]

The electrical energy storage device 100 according to this embodiment can be manufactured by a method including the following steps: (step 1A) a case preparing step; (step 1B) an electrode body preparing step; (step 2) the inserting step; (step 3) the joining step; and (step 4) a sealing step, for example. However, the order of (step 1A) the case preparing step and (step 1B) the electrode body preparing step is not limited in particular and may be opposite or may be substantially the same time. In addition, the order of (step 3) the joining step and (step 4) the sealing step is not limited in particular and may be opposite or may be substantially the same time. The manufacturing method disclosed herein may further include another step at an optional stage. For example, (step 4 )the sealing step may be followed by a step of injecting the electrolyte solution into the case 10. FIG. 6 is an explanatory view of (step 1A) the case preparing step and (step 2) the inserting step. Note that in FIG. 6, the bottom wall 12a of the case main body 12 is in an inversion posture of facing upward in the vertical direction in consideration of, for example, the workability in (step 3) the joining step to be described below.

In (step 1A) the case preparing step, the case main body 12 and the sealing plate 14 are prepared. Specifically, the case main body 12 with the bottomed tubular shape including the bottom wall 12a, the side walls 12b and 12c, and the opening 12h, and the sealing plate 14 that seals the opening 12h are prepared. The case main body 12 and the sealing plate 14 may be a purchased product supplied from a supplier or the like or can be manufactured by yourself. In some embodiments, the case main body 12 preferably has the terminal (the positive electrode terminal 30 and/or the negative electrode terminal 40) attached to the bottom wall 12a in advance as illustrated on the upper side in FIG. 6. The terminal is preferably attached to the bottom wall 12a in a state of being insulated from the bottom wall 12a through an insulating member (here, the gasket 90). The terminal may be attached by any method without particular limitations. Here, the terminal is attached in advance to the bottom wall 12a together with the gasket 90 by the method of insert molding (integral molding).

That is to say, the case main body 12 is prepared as an integrally molded product that is integrated with the gasket 90 and the terminal (the positive electrode terminal 30 and/or the negative electrode terminal 40). In another embodiment, however, the terminal may be attached to the bottom wall 12a by the caulking process (riveting) or the like, or may be attached to the bottom wall 12a through the adhesive layer (adhesive or the like). The terminal does not need to be attached to the bottom wall 12a first and can be attached to the bottom wall 12a in the inserting step, the joining step, or the like to be described below, for example, which will also be described in a modification (4) below.

In (step 1B) the electrode body preparing step, the electrode body 20 is prepared. The electrode body 20 may be a purchased product supplied from the supplier or the like or can be manufactured by yourself. In one example, first, the positive electrode 22 with a band shape and the negative electrode 24 with a band shape are stacked on each other through the separator 26 with a band shape, and wound in the longitudinal direction using the winding axis WL as a center so as to be formed in a tubular shape. At this time, adjustment is conducted so that the plurality of positive electrode tabs 22t and the plurality of negative electrode tabs 24t project from the same end side and are stacked at different positions. Next, the electrode body (tubular body) wound into the tubular shape is subjected to press-molding into a flat shape, for example, so that the electrode body 20 with the flat shape is manufactured. Then, the plurality of positive electrode tabs 22t are bundled, preferably the positive electrode tabs 22t are joined together, thereby being integrated as the positive electrode tab group 27. Similarly, the plurality of negative electrode tabs 24t are bundled, preferably the negative electrode tabs 24t are joined together, thereby being integrated as the negative electrode tab group 28.

In (step 2) the inserting step, after the case preparing step, the electrode body 20 with the conductive member (the positive electrode current collecting member 50 and/or the negative electrode current collecting member 60) attached thereto is inserted into the case main body 12 and at least a part of the conductive member is inserted into the penetration hole 30h of the terminal (the positive electrode terminal 30 and/or the negative electrode terminal 40). In some embodiments, before the electrode body 20 is inserted into the case main body 12, first, a united object including the electrode body 20, the conductive member, and the spacer 80 is manufactured as illustrated on the lower side in FIG. 6.

Specifically, first, the first connection part 51 of the positive electrode current collecting member 50 is attached to the positive electrode tab group 27 of the electrode body 20 by welding such as ultrasonic welding, resistance welding, or laser welding, for example. Similarly, the first connection part 61 of the negative electrode current collecting member 60 is attached to the negative electrode tab group 28 of the electrode body 20. Thus, the electrode body 20 and the conductive member (the positive electrode current collecting member 50 and/or the negative electrode current collecting member 60) are integrated (connected). Then, the electrode body 20 is covered with the electrode body holder 29 (resin sheet or the like).

Next, the spacer 80 including the end part penetration holes 85 and 86 is prepared and the spacer 80 is connected to the conductive member. Here, the second connection part 52 with the columnar shape of the positive electrode current collecting member 50 and the second connection part 62 with the columnar shape of the negative electrode current collecting member 60 are inserted into the end part penetration holes 85 and 86 of the spacer 80, respectively. Thus, the electrode body 20 is integrated with (connected to) the spacer 80. The spacer 80 is placed at the first connection part 51 of the positive electrode current collecting member 50 and the first connection part 61 of the negative electrode current collecting member 60.

In this embodiment, the second connection part 52 with the columnar shape of the positive electrode current collecting member 50 and the second connection part 62 with the columnar shape of the negative electrode current collecting member 60 are inserted into the end part penetration holes 85 and 86 of the spacer 80; thus, both members are integrated (connected). However, the method of integration is not limited to this method. In another embodiment, the spacer 80 may include, instead of the end part penetration holes 85 and 86 or in addition to the end part penetration holes 85 and 86, a part where the first connection part 51 of positive electrode current collecting member 50 and/or the first connection part 61 of the negative electrode current collecting member 60 is positioned (for example, an engagement concave part or a fixing claw part). Then, the spacer 80 and the conductive member (the positive electrode current collecting member 50 and/or the negative electrode current collecting member 60) may be integrated (connected) through the engagement concave part or the fixing claw part.

Next, as indicated by an arrow in FIG. 6, the electrode body 20 integrated with the spacer 80 is inserted into the case main body 12. Specifically, the electrode body 20 is inserted through the opening 12h of the case main body 12 so that the side where the conductive member (the positive electrode current collecting member 50 and/or the negative electrode current collecting member 60) is attached faces the bottom wall 12a. As described above, the spacer 80 according to this embodiment is configured so that its outer periphery is in contact with or close to the inner surface of the side walls of the case main body 12 (the pair of long side walls 12b and the pair of short side walls 12c). Therefore, the spacer 80 inserted into the case main body 12 moves toward the bottom wall 12a along the side walls 12b and 12c of the case main body 12. Thus, the electrode body 20 can be kept horizontal easily and it is possible to suppress that the electrode body 20 is accommodated in the tilted state in the case main body 12 or gets caught by the side wall in the middle of moving, for example. That is to say, the spacer 80 according to this embodiment can function as the guide member that guides the electrode body 20 to a desired arrangement position.

In this embodiment, as the spacer 80 moves toward the bottom wall 12a along the side walls 12b and 12c of the case main body 12, the conductive members (the positive electrode current collecting member 50 and the negative electrode current collecting member 60) also move toward the bottom wall 12a and at least a part of the conductive members is inserted into the penetration holes 30h and 40h of the terminals (the positive electrode terminal 30 and the negative electrode terminal 40). Specifically, the second connection part 52 with a columnar shape of the positive electrode current collecting member 50 is inserted into the penetration hole 30h of the positive electrode terminal 30. In addition, the second connection part 62 with a columnar shape of the negative electrode current collecting member 60 is inserted into the penetration hole 40h of the negative electrode terminal 40. Thus, the conductive member can be stably inserted into the penetration hole of the terminal provided at the bottom wall 12a. That is to say, the spacer 80 according to this embodiment can also function as a positioning member that guides the conductive member to a desired joining position. In this embodiment, moreover, an end surface of the second connection part 52 of the positive electrode current collecting member 50 is flush with the outer flange part 32 of the positive electrode terminal 30.

As illustrated in FIG. 6, this step is performed in such a way that the bottom wall 12a of the case main body 12 is in the inversion posture of facing upward in the vertical direction in this embodiment. In the case where the weight of the electrode body 20 is large, for example, this step may be performed in such a way that the side walls (the pair of long side walls 12b or the pair of short side walls 12c) are in a posture of existing up and down in the vertical direction and the short sides or the long sides of the bottom wall 12a extend in the vertical direction.

In (step 3) the joining step, after the inserting step, the conductive member (the positive electrode current collecting member 50 and/or the negative electrode current collecting member 60) and the terminal (the positive electrode terminal 30 and/or the negative electrode terminal 40) are joined. In this embodiment, while the bottom wall 12a remains in the inversion posture of facing upward in the vertical direction, the electrode body 20 is pressurized from the opening 12h side and pressed toward the bottom wall 12a, so that a state in which the second connection part 52 of the positive electrode current collecting member 50 is inserted into the penetration hole 30h of the positive electrode terminal 30 is kept. It is preferable that a state in which the end surface of the second connection part 52 and the periphery of the penetration hole 30h of the positive electrode terminal 30 be substantially flush with each other. Thus, the positive electrode current collecting member 50 and the positive electrode terminal 30 can be brought into contact with each other for sure. Then, a place where the second connection part 52 of the positive electrode current collecting member 50 inserted into the penetration hole 30h and the positive electrode terminal 30 are in contact is joined. In this embodiment, at the periphery of the penetration hole 30h of the positive electrode terminal 30, the tip end part of the second connection part 52 of the positive electrode current collecting member 50 and the outer flange part 32 of the positive electrode terminal 30 are joined. Thus, the positive electrode current collecting member 50 and the positive electrode terminal 30 can be joined stably.

The joining method is not limited in particular. In some embodiments, it is preferable to perform welding joining by delivering an energy beam such as laser from outside the case main body 12 (the outer surface side of the bottom wall 12a). Joining from outside the case main body 12 makes it possible to see the joining part with eyes; therefore, the conductive member and the terminal can be joined more stably. In this embodiment, the joining part J with a ring shape (for example, annular shape) is formed along the penetration hole 30h.

In (step 4) the sealing step, the sealing plate 14 is engaged with the opening 12h of the case main body 12, so that the periphery of the opening 12h of the case main body 12 and the sealing plate 14 are joined. Thus, the joining part 10w is formed to seal the case 10. The joining method may be similar to the conventional method without particular limitations. In some embodiments, it is preferable to perform welding joining by delivering an energy beam such as laser to the engagement prat between the case main body 12 and the sealing plate 14 along the periphery of the opening 12h. In this manner, the electrical energy storage device 100 can be manufactured.

### [Application of electrical energy storage device]

The electrical energy storage device 100 can be used for various purposes, but can be suitably used in an application in which the load can be applied to the terminal (the positive electrode terminal 30 and/or the negative electrode terminal 40) during the use, for example, as a power source (driving power source) for a motor mounted on a moving body (typically, a vehicle such as a passenger car or a truck). The vehicle is not limited to a particular type, and may be, for example, a plug-in hybrid electric vehicle (PHEV), a hybrid electric vehicle (HEV), or a battery electric vehicle (BEV).

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

### (1) Current collector and electrode tab:

(1-1) For example, in the aforementioned embodiment, the positive electrode current collector 22c of the positive electrode 22 is a metal foil, specifically, an aluminum foil. In addition, the negative electrode current collector 24c of the negative electrode 24 is a metal foil, specifically, a copper foil. However, the present disclosure is not limited to these examples. In a modification, the current collector (the positive electrode current collector 22c and/or the negative electrode current collector 24c, preferably both) preferably has a structure including a core body with an insulating property (for example, resin layer) and a pair of metal layers formed on a pair of surfaces (both surfaces) of the core body. The total thickness of the current collector is preferably 20 µm or less and more preferably 10 µm or less, although there is no particular limitation.

The core body is preferably formed of resin such as polyethylene terephthalate (PET), nylon, polypropylene (PP), or polyethylene (PE). When the total thickness of the current collector is 100%, the thickness of the core body is preferably 50% or more. Thus, the weight of the electrode body 20 can be reduced and when, for example, the electrode tab (the positive electrode tab 22t and/or the negative electrode tab 24t) is disposed in a posture of being disposed below in the vertical direction during the use of the electrical energy storage device 100, the damage of the electrode tab and the electrode body 20 can be suppressed effectively. In addition, as the metal layer, it is preferable to use aluminum, an aluminum alloy, copper, a copper alloy, nickel, a nickel alloy, iron, an iron alloy, or the like.

(1-2) In the embodiment described above, for example, the electrode tab (the positive electrode tab 22t and/or the negative electrode tab 24t) is the region of the current collector (the positive electrode current collector 22c and/or the negative electrode current collector 24c) where the active material layer (the positive electrode active material layer 22a and/or the negative electrode active material layer 24a) is not formed. However, the present disclosure is not limited to this example. The electrode tab may be a member separated from the current collector. For example, in the case where the current collector has the structure of including the core body and the pair of metal layers as described above, a conductive member including a metal plate or a metal foil thicker than the metal layer may be attached to the metal layer part and the conductive member may be connected to another conductive member (the positive electrode current collecting member 50 and/or the negative electrode current collecting member 60) as the electrode tab.

### (2) Spacer:

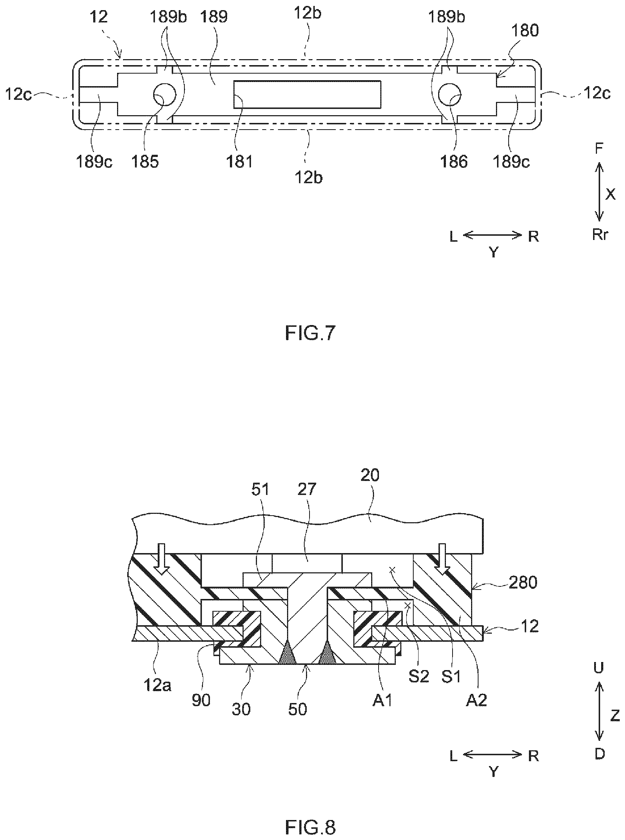

(2-1) In the aforementioned embodiment in FIG. 5, for example, the outer periphery of the spacer 80 (specifically, the base part 89) is in contact with or close to the entire circumference of the side walls of the case main body 12 (the pair of long side walls 12b and the pair of short side walls 12c). However, the present disclosure is not limited to this example. FIG. 7 is a view corresponding to FIG. 5 according to the modification. A spacer 180 illustrated in FIG. 7 further includes, in addition to a base part 189 with a flat plate shape, a central part penetration hole 181, and end part penetration holes 185 and 186, first extension parts 189b extending from the base part 189 toward the facing pair of long side walls 12b, and second extension parts 189c extending from the base part 189 toward the facing pair of short side walls 12c. In the spacer 180, the first extension part 189b and the second extension part 189c are in contact with or close to a part of the side walls of the case main body 12. Even the spacer 180 in such a mode can sufficiently function as the guide member for the electrode body 20 or the positioning member for the conductive member as described above.

(2-2) In addition, in the aforementioned embodiment, for example, the base part 89 of the spacer 80 has the flat plate shape. However, the present disclosure is not limited to this example. FIG. 8 is a view corresponding to FIG. 4 according to the modification. As illustrated in FIG. 8, a spacer 280 includes a thin region A1 that is provided at a periphery of the positive electrode terminal 30 and the positive electrode tab group 27 and has relatively small thickness, and a thick region A2 that is provided at a position apart from the positive electrode terminal 30 and the positive electrode tab group 27 and has relatively large thickness. Thus, at the periphery of the positive electrode terminal 30 and the positive electrode tab group 27, the gap can be secured between the electrode body 20 and the bottom wall 12a of the case main body 12. With a such structure, when the bottom wall 12a of the case main body 12 is disposed below in the vertical direction at the manufacture of, or during the use of the electrical energy storage device 100, the weight of the electrode body 20 is applied to the thick region A2 as indicated by an arrow in FIG. 8. Therefore, by the own weight of the electrode body 20, the damage of the conductive path or the part to which the positive electrode terminal 30 is attached can be suppressed suitably. In addition, even if the external force such as vibration or impact is applied during the use of the electrical energy storage device 100, the electrode body 20 will not move toward the bottom wall 12a easily.

In the modification in FIG. 8, the gap between the electrode body 20 and the bottom wall 12a is sectioned into two in the up-down direction Z by the thin region A1 of the spacer 280. Specifically, in the up-down direction Z, a first space S1 is secured between the electrode body 20 and the thin region A1 of the spacer 280 and a second space S2 is secured between the thin region A1 of the spacer 280 and the bottom wall 12a. When the first space S1 is secured, the damage of the positive electrode tab group 27 can be suppressed suitably and the conduction reliability can be improved. In addition, when the second space S2 is secured, the adhesion of the part to which the positive electrode terminal 30 is attached, particularly among the bottom wall 12a, the gasket 90, and the positive electrode terminal 30 can be kept easily and the sealability or the reliability can be improved.

A thickness T1 of the thick region A2 (the vertical length with respect to the bottom wall 12a) is preferably 0.5 times or more, more preferably 0.6 times or more, and still more preferably 0.7 times or more a distance D1 from the end surface of the electrode body 20 on the bottom wall 12a side to the bottom wall 12a. In addition, in the long side direction Y, the width of the thin region A1 is preferably larger than the width of the positive electrode tab group 27 and more preferably larger than the width of the first connection part 51 of the positive electrode current collecting member 50. Moreover, the thickness T1 of the thick region A2 is preferably twice or more and more preferably three times or more the thickness of the thin region A1.

(2-3) In the embodiment described above, for example, the spacer 80 functions as the positioning member for the conductive member (the positive electrode current collecting member 50 and/or the negative electrode current collecting member 60). The method for positioning the conductive member, however, is not limited to this method. The spacer 80 does not need to have the function as the positioning member. In the modification, the electrode body holder 29 may have a function as the positioning member for the conductive member. In this case, the outer edge of the electrode body 20 wrapped with the electrode body holder 29 is preferably in contact with or close to the inner surface of the side wall of the case main body 12. The gap between the outer edge of the electrode body 20 wrapped with the electrode body holder 29 and the side wall of the case main body 12 (the difference between the inner size of the case main body 12 and the outer size of the electrode body holder 29) is preferably 1 mm or less, more preferably 0.8 mm or less, and still more preferably 0.5 mm or less. In addition, it is preferable that the electrode body holder 29 have the end part penetration hole at the surface where the conductive member (the positive electrode current collecting member 50 and/or the negative electrode current collecting member 60) is disposed, and that the conductive member (specifically, the second connection part to be inserted into the penetration hole of the terminal) penetrate the end part penetration hole.

### (3) Conductive path:

The joining part J is not limited to the embodiment in FIG. 4. The joining part J may be formed inside the penetration hole 30h. In addition, the conductive path can be changed as described in the following first to third modifications.

### (3-1) First modification

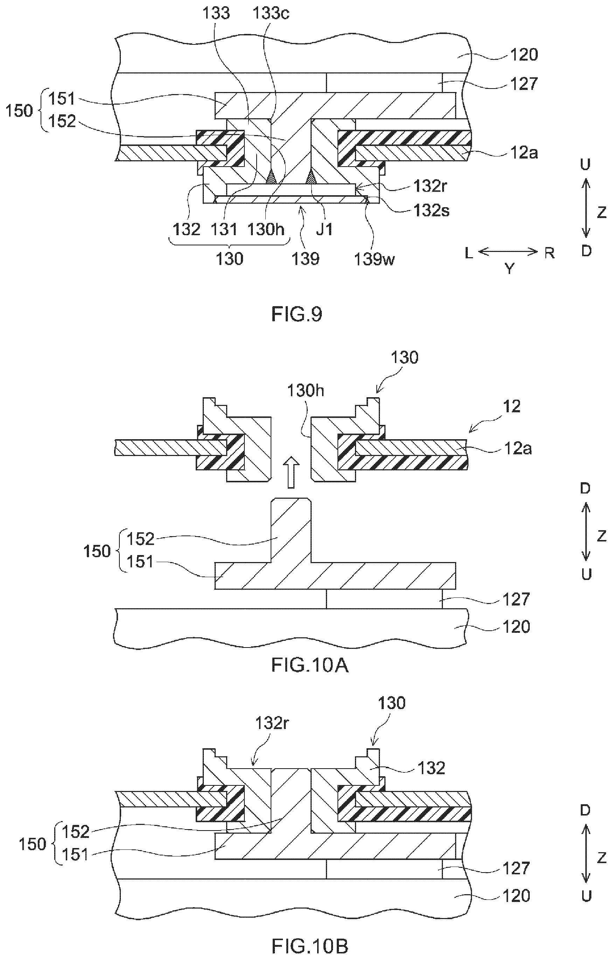

FIG. 9 is a view corresponding to FIG. 4 according to the first modification. As illustrated in FIG. 9, in this modification, an inner flange part 133 of a positive electrode terminal 130 has a chamfered part 133c at a corner part on a penetration hole 130h side (side to be coupled to a tubular part 131). Thus, the insertion property when a positive electrode current collecting member 150 (specifically, a second connection part 152) is inserted into the penetration hole 130h can be improved. The chamfered part 133c is continuously formed in a circumferential direction of the penetration hole 130h. Although the shape of the chamfered part 133c is not limited in particular, for example, the shape may be a chamfered shape with a corner part cut off at a predetermined angle (for example, 45°), a rounded shape with a corner part rounded, or the like.

In this modification, an outer flange part 132 of the positive electrode terminal 130 includes a concave part 132r provided at a surface on a side far from the bottom wall 12a of the case main body 12 (a surface on a lower side in FIG. 9) and a step part 132s provided in the concave part 132r. The positive electrode terminal 130 further includes a cover member 139 here. Note that although the cover member 139 is a part of the positive electrode terminal 130 here, the cover member 139 does not need to be a part of the positive electrode terminal 130.

The concave part 132r is provided around the penetration hole 130h so as to surround the penetration hole 130h. In the XY plan view, the outer shape of the concave part 132r is a substantially ring-like shape (specifically, substantially annular shape). In the XY plan view, a center of the concave part 132r coincides with a center of the penetration hole 130h. The outer diameter of the concave part 132r is larger than the penetration hole 130h. The outer diameter of the concave part 132r is larger than that of the inner flange part 133 here. The step part 132s is provided at an inner surface of the concave part 132r. In the plan view, the outer shape of the step part 132s is a substantially ring-like shape (specifically, substantially annular shape). The step part 132s has the cover member 139 engaged therewith. The step part 132s also functions as a guide indicating the position where the cover member 139 is engaged.

In this modification, a joining part J1 between the positive electrode current collecting member 150 (the first conductive member) and the positive electrode terminal 130 (the first electrode terminal) is provided in the concave part 132r. Specifically, the joining part J1 is provided at a bottom surface of the concave part 132r (a surface corresponding to a part of the outer flange part 132 and facing the cover member 139). The joining part J1 may be provided continuously (in a ring shape) in the circumferential direction along a border part between the positive electrode terminal 130 and the second connection part 152 of the positive electrode current collecting member 150, or may be formed of a plurality of spot joining parts disposed at separate positions in the circumferential direction. Arranging the joining part J1 in the concave part 132r makes it difficult for the joining part J1 to project toward the outer surface of the bottom wall 12a. Therefore, it is possible to suppress that the joining part J1 is damaged or broken due to interference with another member.

The cover member 139 is disposed so as to cover the joining part J1 between the positive electrode terminal 130 and the positive electrode current collecting member 150. The cover member 139 is a plate-shaped member here. The cover member 139 is conductive here, and is preferably formed of metal and for example, the metal similar to that of the outer flange part 132 may be used. The outer shape of the cover member 139 is substantially circular. The cover member 139 is to seal an opening of the concave part 132r here. By the provision of the cover member 139, the airtightness of the inside of the case 10 can be secured more certainly. The cover member 139 is engaged with the step part 132s here. The outer surface of the cover member 139 is substantially flush with a lower end surface of the outer flange part 132 (specifically, an outer peripheral part of the concave part 132r).

In an engagement part between the outer periphery of the concave part 132r and the cover member 139, a joining part (for example, welding joining part) 139w is formed. The joining part 139w has a ring shape (for example, annular shape) here and is provided continuously along the entire circumference at a border part between the outer periphery of the concave part 132r and the cover member 139. Thus, the concave part 132r is airtightly sealed (closed). Note that in order to improve the sealability of the engagement part, a sealing member made of rubber or resin may be disposed in a part of the outer flange part 132 that is in contact with the cover member 139 (for example, the outer periphery of the step part 132s).

The cover member 139 is entirely accommodated in the concave part 132r here. Arranging the cover member 139 in the concave part 132r makes it possible to suppress the projecting height of the cover member 139. In addition, it is also possible to suppress that the cover member 139 or the joining part 139w is damaged or broken due to interference with another member.

In this modification, the cover member 139 has the flat plate shape and is attached to the opening of the concave part 132r; however, the structure of the cover member is not limited thereto. The cover member may have, for example, a cup-like shape including a convex shape and an outer edge part provided along the entire circumference of the convex part. Inside the convex part, a space is formed. In this case, the convex part of the cover member may be put on the joining part J1 between the positive electrode terminal 130 and the positive electrode current collecting member 150, so that the outer edge part of the cover member is joined (for example, joined by welding) to the outer flange part 132 around the joining part J1.

As illustrated in FIG. 9, the spacer is not disposed between the bottom wall 12a and the electrode body 120 in this modification. Here, the inner flange part 133 of the positive electrode terminal 130 fixed to the bottom wall 12a and a first connection part 151 of the positive electrode current collecting member 150 are in direct contact with each other also inside the case main body 12. However, the spacer may be disposed between the bottom wall 12a and the electrode body 120 similarly to the aforementioned embodiment in FIG. 4.

A manufacturing process according to this modification further includes (step 3X) a cover attaching step in addition to the steps up to (step 3) the joining step in the aforementioned embodiment. FIG. 10A and FIG. 10B are explanatory views of the manufacturing process according to the first modification. In FIG. 10A and FIG. 10B, the vicinity of the positive electrode terminal 130, which is a main part, is partially enlarged. In addition, the bottom wall 12a of the case main body 12 is in the inversion posture of facing upward in the vertical direction here. In this modification, as illustrated in FIG. 10A, the positive electrode current collecting member 150 as the conductive member is attached to the electrode body 120 (specifically, a positive electrode tab group 127). Specifically, the positive electrode tab group 127 of the electrode body 120 is disposed at a position of the first connection part 151 that is displaced from the second connection part 152. The positive electrode tab group 127 is disposed at a position not overlapping with the second connection part 152 in the XY plan view. For example, by joining the positive electrode tab group 127 in a region with a flat plate shape in the first connection part 151 where the second connection part 152 is not formed, the first connection part 151 and the positive electrode tab group 127 can be joined together more stably by ultrasonic joining or the like.

(Step 2) In the inserting step, for example, the case main body 12 is set to the inversion posture that the bottom wall 12a faces upward in the vertical direction and as indicated by an arrow in FIG. 10A, the second connection part 152 with a columnar shape of the positive electrode current collecting member 150 is inserted into the penetration hole 130h of the positive electrode terminal 130. As illustrated in FIG. 10B, an end surface of the second connection part 152 that is inserted into the penetration hole 130h is substantially flush with the bottom surface of the concave part 132r here. A tip end of the second connection part 152 does not project into the concave part 132r or is disposed in the concave part 132r here.

In (step 3) the joining step, the positive electrode current collecting member 150 (the first conductive member) and the positive electrode terminal 130 (the first electrode terminal) are joined together in the concave part 132r. Specifically, a place where the end surface of the second connection part 152 of the positive electrode current collecting member 150 that is inserted into the penetration hole 130h and the outer flange part 132 of the positive electrode terminal 130 are in contact with each other is joined. The joining may be performed continuously in the circumferential direction along a border part between the positive electrode terminal 130 and the positive electrode current collecting member 150, or may be spot joining performed intermittently in the circumferential direction. Thus, the joining part J1 (see FIG. 9) is formed in the concave part 132r.

In (step 3X) the cover attaching step, the joining part J1 between the positive electrode current collecting member 150 (the first conductive member) and the positive electrode terminal 130 (the first electrode terminal) is covered with the cover member 139 after the joining step. Specifically, the cover member 139 is engaged with the step part 132s of the concave part 132r, so that the outer periphery of the concave part 132r and the cover member 139 are joined together. The joining method is not limited in particular. In some embodiments, the welding joining is preferably performed in such a way that an engagement part between the outer flange part 132 and the cover member 139 is irradiated with an energy beam such as laser along a periphery of the concave part 132r. The joining is preferably performed continuously in the circumferential direction along the border part between the outer flange part 132 and the cover member 139. Thus, the joining part 139w (see FIG. 9) is formed and the concave part 132r is sealed.

### (3-2) Second modification

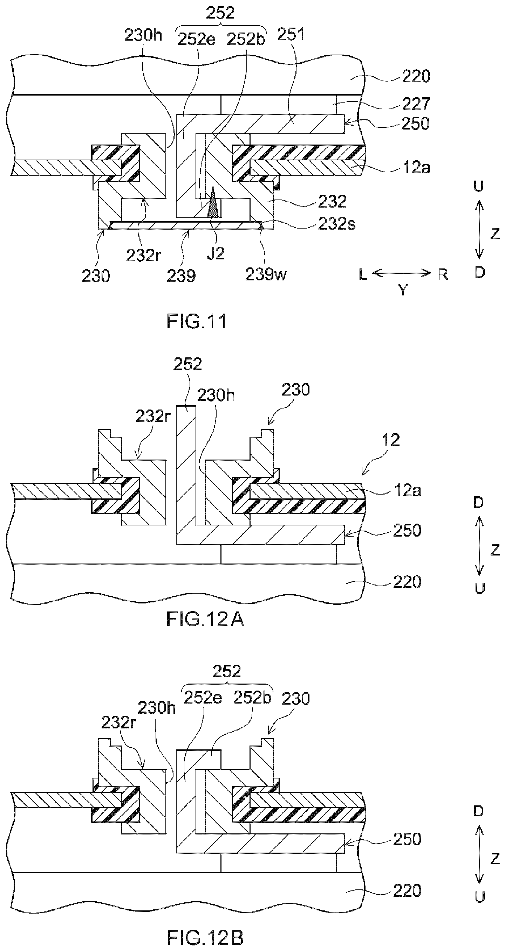

FIG. 11 is a view corresponding to FIG. 4 according to a second modification. As illustrated in FIG. 11, in this modification, a positive electrode current collecting member 250 as the conductive member is attached to an electrode body 220 (specifically, a positive electrode tab group 227). The positive electrode current collecting member 250 is formed by bending a plate-shaped member, which is different from that in the first modification described above. Except this, this modification is similar to the first modification described above. In this modification, a positive electrode terminal 230 preferably incudes a cover member 239 in order to secure the airtightness more certainly, which is similar to the first modification described above.

The positive electrode current collecting member 250 according to this modification includes a first connection part 251 and a second connection part 252. The second connection part 252 includes an extension part 252e that extends from the first connection part 251 and is inserted into a penetration hole 230h of the positive electrode terminal 230, and a bent part 252b that is bent from the extension part 252e. The extension part 252e extends along the penetration hole 230h. The bent part 252b extends along the first connection part 251 (substantially horizontal to the first connection part 251) here. The bent part 252b is in contact with a bottom surface of a concave part 232r of the positive electrode terminal 230. The bent part 252b is joined to the bottom surface of the concave part 232r (a part of an outer flange part 232) outside the case main body 12. At the bottom surface of the concave part 232r, a joining part J2 between the positive electrode terminal 230 and the positive electrode current collecting member 250 (the conductive member) is provided.

The manufacturing process according to this modification further includes (step 2X) a bending step after (step 2) the inserting step according to the first modification described above. FIG. 12A and FIG. 12B are explanatory views of a manufacturing process according to the second modification. In FIG. 12A and FIG. 12B, the vicinity of the positive electrode terminal 230, which is a main part, is partially enlarged. Here, the bottom wall 12a of the case main body 12 is in the inversion posture of facing upward in the vertical direction. In this modification, in (step 2) the inserting step, the second connection part 252 with the flat plate shape of the positive electrode current collecting member 250 is inserted into the penetration hole 230h of the positive electrode terminal 230 as illustrated in FIG. 12A. A tip end part of the second connection part 252 projects from the penetration hole 230h and extends into the concave part 232r.

In (step 2X) the bending step, after the inserting step, the positive electrode current collecting member 250 (the first conductive member) is deformed as illustrated in FIG. 12B. Specifically, a part (tip end part) of the second connection part 252 that projects from the penetration hole 230h is bent. Here, the tip end part of the second connection part 252 is bent into a substantially L-like shape with respect to the bottom surface of the concave part 232r. Thus, the bent part 252b is formed at the tip end of the extension part 252e.

In (step 3) the joining step, after the bending step, the deformed positive electrode current collecting member 250 is brought into contact with the positive electrode terminal 230 (the first electrode terminal) and joined to the positive electrode terminal 230. Specifically, the bent part 252b of the positive electrode current collecting member 250 is brought into contact with the bottom surface of the concave part 232r of the positive electrode terminal 230 and joined to the outer flange part 232 (see FIG. 11). Thus, the joining part J2 (see FIG. 11) is formed in the concave part 232r. Providing the bent part 252b as described in this modification makes it possible to join the positive electrode current collecting member 250 and the positive electrode terminal 230 more stably. Even if the external force is applied during the use of the electrical energy storage device 100, the second connection part 252 can bend to absorb the external force, thereby reducing the burden on the joining part J2. Accordingly, the conduction reliability of the joining part J2 can be improved.

In (step 3X) the cover attaching step, after the joining step, the cover member 239 is engaged with a step part 232s (see FIG. 11) of the concave part 232r and the cover member 239 is joined to the outer flange part 232 along the periphery of the concave part 232r, so that a joining part 239w (see FIG. 11) is formed similarly to the first modification.

### (3-3) Third modification

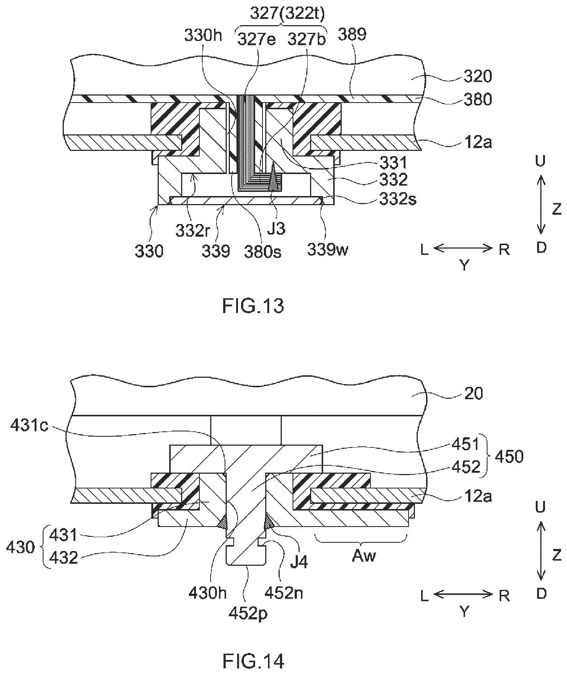

FIG. 13 is a view corresponding to FIG. 4 according to a third modification. As illustrated in FIG. 13, in this modification, a positive electrode terminal 330 includes a tubular part 331, an outer flange part 332, and a penetration hole 330h. The positive electrode terminal 330 does not include an inner flange part here. In this modification, moreover, the positive electrode current collecting member is not attached to an electrode body 320 (the positive electrode current collecting member is not interposed), and a positive electrode tab group 327 including a plurality of positive electrode tabs 322t is directly inserted into the penetration hole 330h of the positive electrode terminal 330. In this modification, the positive electrode tab group 327 is one example of "the first conductive member".

The projecting length of the positive electrode tab 322t (the vertical length projecting from a root) can be, for example, 5 mm or more or 10 mm or more. Regarding the plurality of positive electrode tabs 322t, the positive electrode tabs 322t may be joined together by welding or the like so as to be integrated before being inserted into the penetration hole 330h of the positive electrode terminal 330. In this modification, the positive electrode terminal 330 preferably includes a cover member 339 in order to secure the airtightness more certainly, similarly to the first and second modifications described above.

The positive electrode tab group 327 is inserted into the penetration hole 330h of the positive electrode terminal 330. The positive electrode tab group 327 includes an extension part 327e and a bent part 327b that is bent from the extension part 327e, similarly to the second connection part 252 of the positive electrode current collecting member 250 in the second modification. The bent part 327b is in contact with the bottom surface of a concave part 332r of the positive electrode terminal 330. The bent part 327b is joined to the positive electrode terminal 330. Specifically, the bent part 327b is joined to a bottom surface of the concave part 332r (a part of the outer flange part 332) outside the case main body 12. At the bottom surface of the concave part 332r, a joining part J3 between the positive electrode terminal 330 and the positive electrode tab group 327 (the conductive member) is provided.

A manufacturing process according to this modification may be similar to that in the second modification except that the conductive member (the positive electrode current collecting member 250) in the second modification described above is the positive electrode tab group 327. For example, in (step 2) the inserting step, the positive electrode tab group 327 (the first electrode tab group) may be inserted into the penetration hole 330h of the positive electrode terminal 330 (the first electrode terminal), in (step 2X) the bending step, the positive electrode tab group 327 may be deformed to form the bent part 327b at the tip end part of the extension part 327e, and in (step 3) the joining step, the bent part 327b of the positive electrode tab group 327 may be brought into contact with the positive electrode terminal 330 to be joined to the positive electrode terminal 330. In addition, in (step 3X) the cover attaching step, the cover member 339 is engaged with a step part 332s of the concave part 332r and the outer flange part 332 and the cover member 339 are joined together along the periphery of the concave part 332r, so that a joining part 339w is formed, similarly to the first and second modifications described above.

In this modification, the positive electrode tab group 327 is directly joined to the positive electrode terminal 330; however, for example, another (second) conductive member may be attached to the tip end part of the bent part 327b and the second conductive member may be joined to the positive electrode terminal 330. Providing the bent part 252b as described in this modification makes it possible to bring the positive electrode tab group 327 or the second conductive member connected to the positive electrode tab group 327 into contact with the positive electrode terminal 30 more stably. In addition, even if the external force is applied during the use of the electrical energy storage device 100, the burden on the joining part J3 can be reduced. Accordingly, the conduction reliability of the joining part J3 can be improved.

Moreover, in this modification, a spacer 380 is disposed between the bottom wall 12a of the case main body 12 and the electrode body 320 similarly to the aforementioned embodiment illustrated in FIG. 4. The spacer 380 is partially disposed in the penetration hole 330h of the positive electrode terminal 330. That is to say, the spacer 380 includes a support part 380s that supports at least a part of the positive electrode tab group 327. The support part 380s extends from a base part 389 of the spacer 380 along the positive electrode tab group 327 (specifically, the extension part 327e). The support part 380s does not project into the concave part 332r here. The support part 380s is inserted into the penetration hole 330h of the positive electrode terminal 330 while supporting at least a part of the positive electrode tab group 327. Thus, it is possible to suppress that the positive electrode tab group 327 is damaged or broken.

### (3-4) Fourth modification

FIG. 14 is a view corresponding to FIG. 4 according to a fourth modification. As illustrated in FIG. 14, in this modification, a center of a penetration hole 430h of a positive electrode terminal 430 is displaced from a center of an outer flange part 432 of the positive electrode terminal 430 in the XY plan view, and in this point, this modification is different from the aforementioned embodiment in FIG. 4. On one side of the outer flange part 432 in the long side direction Y, a region Aw that is a little wider than that on the other side in the long side direction Y is secured in order to connect an external connection member such as a bus bar.

In this modification, moreover, a tubular part 431 of the positive electrode terminal 430 includes a chamfered part 431c at a corner part on the penetration hole 430h side (a part that can come into contact with a positive electrode current collecting member 450 first). Thus, the insertion property when the positive electrode current collecting member 450 is inserted into the penetration hole 430h can be improved. The chamfered part 431c is formed continuously in a circumferential direction of the penetration hole 430h. Although the shape of the chamfered part 431c is not limited in particular, for example, the shape may be a chamfered shape with a corner part cut off at a predetermined angle (for example, 45°), a rounded shape with a corner part rounded, or the like.

In this modification, moreover, a second connection part 452 with a columnar shape of the positive electrode current collecting member 450 projects largely to the outside from the penetration hole 430h of the positive electrode terminal 430, and in this point, this modification is different from the aforementioned embodiment in FIG. 4. Thus, in this modification, a joining part J4 is formed outside the case main body 12 and in a middle part of the second connection part 452 with the columnar shape. The second connection part 452 includes a projection part 452p at a tip end part (an end part on the opposite side of a first connection part 451). Thus, in (step 3) the joining step, the second connection part 452 can be suitably brought into contact with the outer flange part 432 of the positive electrode terminal 430 by pulling the projection part 452p. The projecting length of the projection part 452p from the penetration hole 430h is preferably 1 mm or more (for example, 1 to 10 mm) and more preferably 3 to 5 mm in order to make it easier to grip.

The projection part 452p here includes a notch part 452n (including a constriction, the concave part, or the like) to make it easier to pull the projection part 452p in the joining step. The notch part 452n exists more on the tip end side relative to the joining part J4 (at a part apart from the first connection part 451). In addition, a tip end of the projection part 452p has a rounded shape with a corner part rounded here. Thus, the insertion property when the second connection part 452 is inserted into the penetration hole 430h can be improved. Moreover, it is possible to suppress that the projection part 452p is damaged or broken due to interference with another member. When the diameter of the second connection part 452 with the columnar shape is 1, the rounded shape preferably satisfies R = 0.1 to 0.5.

### (4) Attachment of terminal:

For example, in the aforementioned embodiment in FIG. 6, the terminal (the positive electrode terminal 30 and/or the negative electrode terminal 40) is attached in advance to the bottom wall 12a of the case main body 12 in (step 1A) the case preparing step. That is to say, the case main body 12 is prepared as an integrally molded product that is integrated with the gasket 90 and the terminal (the positive electrode terminal 30 and/or the negative electrode terminal 40). However, the present disclosure is not limited to this example. The terminal can be attached to the bottom wall 12a in (step 3) the joining step, for example. In one example, first, in (step 2) the inserting step, the terminal extraction hole 18 and 19 parts of the bottom wall 12a are sandwiched between the terminal (the positive electrode terminal 30 and/or the negative electrode terminal 40) and the conductive member (the positive electrode current collecting member 50 and/or the negative electrode current collecting member 60) from the inside and outside of the case main body 12, and at least a part of the conductive member is inserted into the penetration holes 30h and 40h of the terminals. Then, in (step 3) the joining step, the terminal and the conductive member are joined together (for example, joined by welding). Thus, the terminal can be attached to the bottom wall 12a (through the insulating member as necessary) at substantially the same time as the formation of the joining part J.

As described above, the following items are given as specific aspects of the art disclosed herein.
Item 1: The electrical energy storage device including: the electrode body that includes the first electrode and the second electrode; the case that accommodates the electrode body; and the first electrode terminal that is electrically connected to the first electrode through the first conductive member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body and includes the penetration hole, and the first conductive member is inserted into the penetration hole and joined to the first electrode terminal.
Item 2: The electrical energy storage device according to Item 1, in which the first electrode includes the first electrode tab, the first current collecting member as the first conductive member is attached to the first electrode tab, and the first current collecting member is inserted into the penetration hole of the first electrode terminal and joined to the first electrode terminal.
Item 3: The electrical energy storage device according to Item 1, in which the first electrode includes the first electrode tab group including the plurality of first electrode tabs, the first electrode tab group is inserted into the penetration hole of the first electrode terminal, and the first electrode tab group or the conductive member connected to the first electrode tab group is joined to the first electrode terminal.
Item 4: The electrical energy storage device according to any one of Items 1 to 3, in which the first electrode terminal includes the concave part at the surface on the side far from the bottom wall, and the joining part between the first conductive member and the first electrode terminal is provided in the concave part.
Item 5: The electrical energy storage device according to any one of Items 1 to 4, further including the cover member that covers the joining part between the first conductive member and the first electrode terminal.
Item 6: The electrical energy storage device according to any one of Items 1 to 5, further including the spacer disposed between the bottom wall and the electrode body.
Item 7: The manufacturing method for the electrical energy storage device including the electrode body that includes the first electrode and the second electrode, the case that accommodates the electrode body, and the first electrode terminal that is electrically connected to the first electrode through the first conductive member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body and includes the penetration hole, and the first conductive member is inserted into the penetration hole and joined to the first electrode terminal, the manufacturing method including: the case preparing step of preparing the case main body and the sealing plate; the inserting step of inserting the electrode body to which the first conductive member is attached, into the case main body and inserting at least a part of the first conductive member into the penetration hole of the first electrode terminal after the case preparing step; and the joining step of joining the first conductive member and the first electrode terminal together after the inserting step.
Item 8: The manufacturing method according to Item 7, in which the first electrode includes the first electrode tab, the first current collecting member as the first conductive member is attached to the first electrode tab, in the inserting step, the first current collecting member is inserted into the penetration hole of the first electrode terminal, and in the joining step, the first current collecting member and the first electrode terminal are joined together.
Item 9: The manufacturing method according to Item 7, in which the first electrode includes the first electrode tab group including the plurality of first electrode tabs, in the inserting step, the first electrode tab group is inserted into the penetration hole of the first electrode terminal, and in the joining step, the first electrode tab group or the conductive member connected to the first electrode tab group is joined to the first electrode terminal.
Item 10: The manufacturing method according to any one of Items 7 to 9, in which the first electrode terminal includes the concave part at the surface on the side far from the bottom wall, and in the joining step, the first conductive member and the first electrode terminal are joined together in the concave part.
Item 11: The manufacturing method according to any one of Items 7 to 10, further including, after the joining step, the cover attaching step of covering the joining part between the first conductive member and the first electrode terminal with the cover member.
Item 12: The manufacturing method according to any one of Items 7 to 11, in which the electrical energy storage device further includes the spacer disposed between the bottom wall and the electrode body, and in the inserting step, the electrode body to which the first conductive member is attached is integrated with the spacer and then, the electrode body integrated with the spacer is inserted into the case main body.
Item 13: The manufacturing method according to any one of Items 7 to 12, in which after the inserting step, the first conductive member is deformed, and in the joining step, the first conductive member that is deformed is brought into contact with the first electrode terminal and joined to the first electrode terminal.

### [Reference Signs List]

10 Case
12 Case main body
12a Bottom wall
14 Sealing plate
20, 120, 220, 320 Electrode body
22 Positive electrode (first electrode/second electrode)
24 Negative electrode (first electrode/second electrode)
27, 127, 227 Positive electrode tab group (first conductive member)
30, 130, 230, 330, 430 Positive electrode terminal (first electrode terminal)
30h, 130h, 230h, 330h, 430h Penetration hole
40 Negative electrode terminal
50, 150, 250, 450 Positive electrode current collecting member (first conductive member)
60 Negative electrode current collecting member
80, 180, 280, 380 Spacer
100 Electrical energy storage device

## Claims

1. An electrical energy storage device (100) comprising:
an electrode body (20) that includes a first electrode (22) and a second electrode (24);
a case (10) that accommodates the electrode body (20); and
a first electrode terminal (30) that is electrically connected to the first electrode (22) through a first conductive member (50), wherein
the case (10) includes
a case main body (12) with a bottomed tubular shape that includes a bottom wall (12a), side walls (12b, 12c) provided at an outer periphery of the bottom wall (12a), and an opening (12h) facing the bottom wall (12a), and
a sealing plate (14) that seals the opening (12h) of the case main body (12),
the first electrode terminal (30) is attached to the bottom wall (12a) of the case main body (12) and includes a penetration hole (30h), and
the first conductive member (50) is inserted into the penetration hole (30h) and joined to the first electrode terminal (30).

2. The electrical energy storage device (100) according to claim 1, wherein
the first electrode (22) includes a first electrode tab (22t),
a first current collecting member as the first conductive member (50) is attached to the first electrode tab (22t), and
the first current collecting member (50) is inserted into the penetration hole (30h) of the first electrode terminal (30) and joined to the first electrode terminal (30).

3. The electrical energy storage device (100) according to claim 1, wherein
the first electrode (22) includes a first electrode tab group (327) including a plurality of first electrode tabs (322t),
the first electrode tab group (327) is inserted into the penetration hole (330h) of the first electrode terminal (330), and
the first electrode tab group (327) or a conductive member connected to the first electrode tab group (327) is joined to the first electrode terminal (330).

4. The electrical energy storage device (100) according to any one of claims 1 to 3, wherein
the first electrode terminal (130) includes a concave part (132r) at a surface on a side far from the bottom wall (12a), and
a joining part (J1) between the first conductive member (150) and the first electrode terminal (130) is provided in the concave part (132r).

5. The electrical energy storage device (100) according to any one of claims 1 to 4, further comprising a cover member (139) that covers the joining part (J1) between the first conductive member (150) and the first electrode terminal (130).

6. The electrical energy storage device (100) according to any one of claims 1 to 5, further comprising a spacer (80) disposed between the bottom wall (12a) and the electrode body (20).

7. A manufacturing method for an electrical energy storage device (100) including an electrode body (20) that includes a first electrode (22) and a second electrode (24), a case (10) that accommodates the electrode body (20), and a first electrode terminal (30) that is electrically connected to the first electrode (22) through a first conductive member (50), wherein
the case (10) includes a case main body (12) with a bottomed tubular shape that includes a bottom wall (12a), side walls (12b, 12c) provided at an outer periphery of the bottom wall (12a), and an opening (12h) facing the bottom wall (12a), and a sealing plate (14) that seals the opening (12h) of the case main body (12),
the first electrode terminal (30) is attached to the bottom wall (12a) of the case main body (12) and includes a penetration hole (30h), and
the first conductive member (50) is inserted into the penetration hole (30h) and joined to the first electrode terminal (30),
the manufacturing method comprising:
a case preparing step of preparing the case main body (12) and the sealing plate (14);
an inserting step of inserting the electrode body (20) to which the first conductive member (50) is attached, into the case main body (12) and inserting at least a part of the first conductive member (50) into the penetration hole (30h) of the first electrode terminal (30) after the case preparing step; and
a joining step of joining the first conductive member (50) and the first electrode terminal (30) together after the inserting step.

8. The manufacturing method according to claim 7, wherein
the first electrode (22) includes a first electrode tab (22t),
a first current collecting member as the first conductive member (50) is attached to the first electrode tab (22t),
in the inserting step, the first current collecting member (50) is inserted into the penetration hole (30h) of the first electrode terminal (30), and
in the joining step, the first current collecting member (50) and the first electrode terminal (30) are joined together.

9. The manufacturing method according to claim 7, wherein
the first electrode (22) includes a first electrode tab group (327) including a plurality of first electrode tabs (322t),
in the inserting step, the first electrode tab group (327) is inserted into the penetration hole (330h) of the first electrode terminal (330), and
in the joining step, the first electrode tab group (327) or a conductive member connected to the first electrode tab group (327) is joined to the first electrode terminal (330).

10. The manufacturing method according to any one of claims 7 to 9, wherein
the first electrode terminal (130) includes a concave part (132r) at a surface on a side far from the bottom wall (12a), and
in the joining step, the first conductive member (150) and the first electrode terminal (130) are joined together in the concave part (132r).

11. The manufacturing method according to any one of claims 7 to 10, further comprising, after the joining step, a cover attaching step of covering a joining part (J1) between the first conductive member (150) and the first electrode terminal (130) with a cover member (139).

12. The manufacturing method according to any one of claims 7 to 11, wherein
the electrical energy storage device (100) further includes a spacer (80) disposed between the bottom wall (12a) and the electrode body (20), and
in the inserting step, the electrode body (20) to which the first conductive member (50) is attached is integrated with the spacer (80) and then, the electrode body (20) integrated with the spacer (80) is inserted into the case main body (12).

13. The manufacturing method according to any one of claims 7 to 12, wherein
after the inserting step, the first conductive member (50) is deformed, and
in the joining step, the first conductive member (50) that is deformed is brought into contact with the first electrode terminal (30) and joined to the first electrode terminal (30).
